(19)

**Europäisches Patentamt**
**European Patent Office**
**Office européen des brevets**

(11) **EP 1 929 572 B1**

(12) **EUROPEAN PATENT SPECIFICATION**

(45) Date of publication and mention
of the grant of the patent:
**05.05.2010 Bulletin 2010/18**

(51) Int Cl.:
*H01M 8/10* (2006.01)          *H01M 4/86* (2006.01)
*H01M 4/88* (2006.01)

(21) Application number: **06764961.6**

(86) International application number:
**PCT/GB2006/002613**

(22) Date of filing: **14.07.2006**

(87) International publication number:
**WO 2007/010207 (25.01.2007 Gazette 2007/04)**

(54) **METHANOL FUEL CELLS**

METHANOL-BRENNSTOFFZELLEN

PILES À COMBUSTIBLE AU MÉTHANOL

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.07.2005 GB 0514581**

(43) Date of publication of application:
**11.06.2008 Bulletin 2008/24**

(73) Proprietor: **Gen-X Power Corp Rarotonga (CK)**

(72) Inventors:
• **CHRISTENSEN, Paul Andrew Morpeth Northumberland NE61 1BS (GB)**

• **WRIGHT, Nicholas George Gosforth Tyne And Wear NE3 1UB (GB)**
• **EGERTON, Terrence Arthur Stockton on Tees Durham TS18 5JD (GB)**

(74) Representative: **Watson, Robert James Mewburn Ellis LLP 33 Gutter Lane London EC2V 8AS (GB)**

(56) References cited:
**EP-A- 1 420 460          WO-A-2006/024869
US-A1- 2003 082 431     US-A1- 2004 253 496
US-A1- 2005 042 499**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to direct and reformate methanol fuel cells containing an anode comprising semiconductor layers.

The generation of active oxygen species is an essential part of the process that occurs in direct and reformate methanol fuel cells.

In direct methanol fuel cells (DMFCs) the overall reaction that takes place is:

$$CH_3OH + \frac{3}{2}O_2 \longrightarrow 2H_2O + CO_2$$

At the anode, methanol approaches the surface and is oxidised to carbon monoxide, which is bound to the surface. This bound carbon monoxide then reacts with an active oxygen species to release $CO_2$. Usually the anode is a metal such as platinum, and active oxygen generation occurs due to the presence of Ru. If the rate of oxidation of the adsorbed CO (determined to a significant extent by the availability of active surface oxygen species) is slower than its formation from the surface reaction of methanol, as in the case in the absence of Ru, then the anode becomes poisoned by adsorbed CO.

In indirect (reformate) methanol fuel cells (IMFCs), the methanol is reformed to give hydrogen as the primary fuel, such that the overall reaction in an IMFC is:

$$2H_2 + O_2 \rightarrow 2H_2O$$

One of the by-products of the reforming of methanol is carbon monoxide, which remains in the fuel feed to the fuel cell, thus becoming adsorbed onto the anode. It is removed by the same reaction as in DMFCs.

The present inventors have previously discovered that, OH radicals, an active form of oxygen, can be generated both in the presence and in the absence of light irradiation at a $TiO_2$ surface when this is deposited on a silicon layer and is overlain with a gold grid. The grid is employed to apply an electric field directly across the $TiO_2$ layer. The current passing through this device (thought to be a measure of the rate of OH generation at the $TiO_2$ surface) is significantly higher than that typically observed at conventional, UV-irradiated $TiO_2$ electrodes. A device based on this work is described in co-pending application GB 0419629.1 (WO2006/024869), filed 3 September 2004.

Evidence for the formation of hydroxyl radicals is provided by the enhanced fluorescence of coumarin at 460 nm, described in Hashimoto et al., Electrochem. Comm., 2, (2000) 207.

The present inventors have realised that the active OH species generated in a device as described above could be used in the electrochemical process as a replacement to facilitate the processes catalysed by the ruthenium and so allow the elimination of the necessity for ruthenium. Furthermore, their studies have unexpectedly shown that an electric field applied via an electrode on the surface of the $TiO_2$ appears not be required for the benefits to occur.

Accordingly, the present invention provides a fuel cell having an anode which comprises:

(a) a semiconductor layer, wherein the semiconductor is preferably silicon or silicon carbide, and where the layer has a thickness from 1 to 1000 $\mu$m;
(b) a $TiO_2$ layer on the semiconductor layer, where the layer may include an alkaline earth oxide MO up to an amount where the layer is $MTiO_3$, and where the layer has a thickness from 5 nm to 1 $\mu$m;
(c) an open metal over-layer.

*Semiconductor layer*

The semiconductor layer may be made of any semiconductor which does not have the same composition as the $TiO_2$ layer, and is preferably silicon or silicon carbide. Silicon is usually preferred on the grounds of cost, although silicon carbide wafers have the advantage of more favourable band energy alignments with the $TiO_2$ layer. Also, SiC is chemically inert which may be of use in some applications. The semiconductor substrate may be doped to render it a n-type semiconductor.

The layer has a thickness from 1 to 1000 $\mu$m. The lower thickness limit may be 10, 100, 200, 300 or even 500 $\mu$m. The upper thickness limit may be 900, 800 or even 600 $\mu$m. Silicon wafers typically have a thickness in the range from 10 to 1000 $\mu$m, and often have a thickness in the range of 500 to 600 $\mu$m, e.g. 550 $\mu$m.

If the wafer is a silicon wafer it may have any suitable crystal orientation, e.g. (100) or (111). The same is the case for a silicon carbide wafer, e.g. (0001).

*TiO$_2$ layer*

The TiO$_2$ layer is deposited on the Si or SiC semiconductor layer, and may contain alkaline earth oxide (MO), e.g. SrO. The maximum amount of MO is such that the layer is MTiO$_3$, although the amount of MO may be less than 5% on a molar basis relating to the TiO$_2$. In some embodiments, it is preferred that there is no MO present, i.e. the layer is simply TiO$_2$.
The TiO$_2$ layer has a thickness from 5 nm to 1 $\mu$m. The upper limit may be 500, 300, 200 or 150 nm. The lower limit may be 10, 50 or 100 nm. A preferred thickness range is 100 to 150 nm, for example 120 nm.

*Manufacture of TiO$_2$ layer*

The TiO$_2$ layer may be deposited on the semiconductor layer using any suitable technique known in the art, e.g. sputtering, electron-beam evaporation, thermal evaporation and chemical vapour deposition.
One possible technique is DC Magneton Sputtering (DCMS) or a modified form of physical vapour deposition which has the advantages of excellent control and experimental flexibility and is an established industrial process suitable for high area, high quality film deposition. Such a process may be used to deposit C-doped or N-doped TiO$_2$ films (see for example Torres, G.R., et al., J. Phys. Chem. B, 108, 5995-6003 (2004)).
The deposition is usually preceded by cleaning of the semiconductor, for example, using acetone, isopropyl alcohol and demineralised water, followed by 'RCA' cleaning and de-oxidisation, for example by treatment in 6% HF for five minutes or by ion beam etching.
The deposition takes place in a vacuum chamber and involves the deposition, either in pure vacuum or with a small oxygen component, of the desired thickness of Ti or TiO$_x$, followed by oxidation to yield the TiO$_2$ layer. If the layer also contains MO, then the initial deposition is of both Ti and M, e.g. Sr. Direct deposition of the TiO$_2$ layer by methods known in the art can also be used.
The TiO$_2$ may also be subjected to a high temperature anneal using temperatures between 300°C and 1000°C in an oxygen rich environment to improve the film.

*Open metal over-layer*

The open metal over-layer extends over the TiO$_2$ layer whilst leaving a proportion of the TiO$_2$ layer uncovered.
In one embodiment, the over-layer is a grid, which is preferably arranged so as to be able to apply a uniform electric field across the TiO$_2$ layer. Typically, the space left uncovered by the grid is between 40% and 60% of the surface area of the TiO$_2$, but may be as low as 30% or as high as 75% of the surface area. The grid wires may have a thickness of between 1 and 1000 $\mu$m, and may be spaced from one another by 1 to 1000 $\mu$m, although it is preferred that the spacing is the same order of magnitude as the wire width. A preferred grid would have wires of between 5 and 10 $\mu$m, spaced from one another by 5 to 10 $\mu$m.
Another embodiment is described below.
An adhesion layer may be used between the TiO$_2$ layer and the metal grid, for example, a 1 to 10 nm layer of Ti.
The open metal over-layer may comprise, and is preferably, platinum, although this may be applied over a layer of inert metal, such as gold or other precious metal.
The open metal over-layer may be deposited on the TiO$_2$ layer using standard techniques, including photolithography, wet chemical etching and X-ray lithography.

*Driving Holes*

The means for driving positive holes from the semiconductor layer to the surface of the TiO$_2$ layer is thought to encourage the generation of active OH species at the surface of the TiO$_2$ layer. One way of doing this is to provide an electrical (ohmic) contact on the semiconductor layer, and by negatively biasing the metal over-layer with respect to this contact. The ohmic contact on the semiconductor layer may be of any suitable configuration, as well known in the art. A preferred minimum voltage applied is 0.01, 0.5, 1V or 2V, and a preferred maximum voltage applied is 9V, 8V or 7V.
An alternative method of driving positive holes is to apply UV or visible light to generate a hole current.

*Fuel cell*

The remainder of the fuel cell, e.g. fuel feed to the anode and oxidant feed to the cathode, and removal of products, can be conventional.
The present invention is thought to be particularly applicable to micro fuel cells. Such fuel cells are described in: Kelley, S.C., et al., Electrochemical and Solid-State Letters, 3(9), 407-409 (2000); Lee, S.J., et al., Journal of Power Sources, 112, 410-418 (2002); Hayase, M., et al., Electrochemical and Solid State Letters, 7(8), A231-234 (2004); and Jayashree et al., Electrochim. Acta, 50, (2005) 4674 - 4682.

Accordingly, in one embodiment of the invention, the fuel cell is a micro fuel cell comprising:

(a) a semiconductor layer, wherein the semiconductor is silicon or silicon carbide, and where the layer has a thickness from 1 to 1000 $\mu$m;

(b) a $TiO_2$ layer on the semiconductor layer, where the layer may include an alkaline earth oxide MO up to an amount where the layer is $MTiO_3$, and where the layer has a thickness from 5 nm to 1 $\mu$m;

(c) a fuel cell layer, which comprises interdigitated electrodes on the $TiO_2$ layer, wherein the cathode is platinum or a methanol-tolerant catalyst insulated from the $TiO_2$ layer; and

(d) means for supplying fuel and removing waste products to the fuel cell layer.

There may additionally be provided:

(e) means for driving positive holes from the semiconductor layer to the surface of the $TiO_2$ layer.

The semiconductor layer, $TiO_2$ layer and means for driving holes are as described above.

*Interdigitated electrodes*

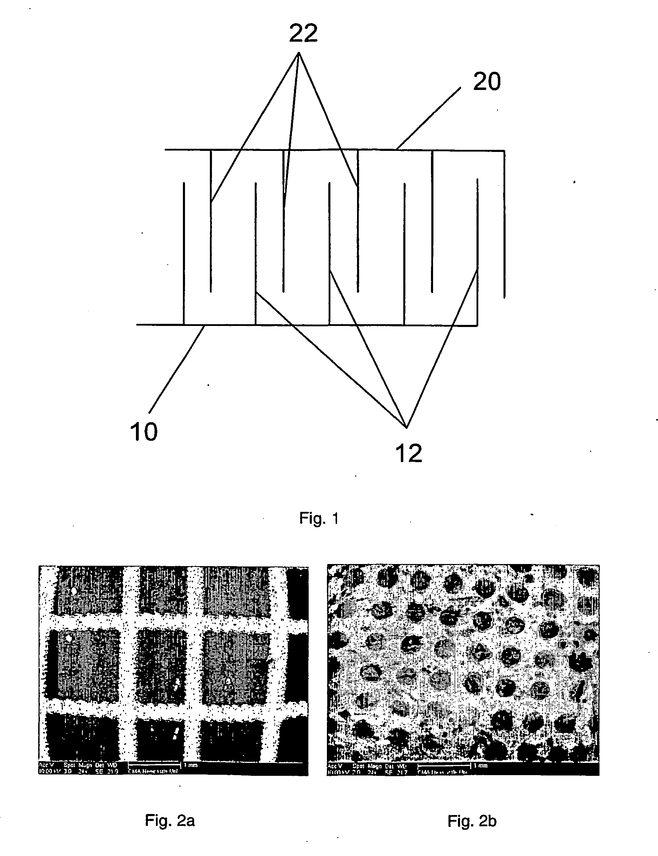

Intergiditated electrodes comprise at least one anode and cathode, which are arranged so that fingers of each electrode extend from separated lines towards the other line, resulting in an arrangement where in between the lines of alternating anode and cathode fingers. Fig. 1 illustrates a possible arrangement, where 10 represents the cathode line, 20 the anode line and 12 and 22 the cathode and anode fingers respectively.

It is possible that the fingers of the electrodes have a thickness of between 1 and 100 $\mu$m, and may be spaced from one another by 1 to 100 $\mu$m, and in one embodiment the spacing is the same order of magnitude as the finger width.

In one embodiment, the electrode arrangement would have fingers of between 5 and 10 $\mu$m, spaced from one another by 5 to 10 $\mu$m.

The anode may comprise platinum, and it is preferred that the anode is platinum and has a high surface area, i.e. a roughness factor in the range of about 10 to 100, and ideally as high as possible. This anode is an open metal over-layer of the present invention. It is preferred that the $Pt/TiO_2$ interline should be as long as possible. If Pt is deposited on Au, or other intermediate metal, to form a $Pt-Au-TiO_2$ multilayer, both the Pt/Au and the $AulTiO_2$ interlines should be as long as possible.

The cathode should be platinum or a methanol-tolerant catalyst as known in the art. Examples include $RuSe_x$ and $RhRu_{5.9}S_{4.7}$, as described in Christensen, *et al.* (Christensen, P.A., et al., Electrochimica Acta, 45, 4237 (2000)), and has a high surface area, i.e. a roughness factor in the range of about 10 to 100, and preferably as high as possible.

The cathode must be insulated from the underlying $TiO_2$ layer and anode grid. Insulating the cathode can be done using a deposited insulator, such as silicon dioxide, silicon nitride or a polymer dielectric (e.g. polyimide).

The electrodes may be deposited on the $TiO_2$ layer using standard techniques, including photolithography and wet chemical etching.

*Ion-conducting Membrane*

It is preferred that an ion-conducting membrane is located between the fingers of the interdigitated electrodes, as part of the fuel cell layer. Ion-conducting membranes are well known in the art, and are sometimes termed 'polymer electrolyte membranes'. Such membranes can be classified by their material, i.e. organic or inorganic/organic composite.

Examples of organic membranes include, but are not limited to, those based on fluorocarbon, hydrocarbon or aromatic polymers with or without side chains, e.g. divinyl benzene with active exchange groups, such as sulphonate and carboxylate for cation exchange, and amine for anion exchange.

Particularly preferred organic membranes include Nafion, a fluorosulphonate ionomer, more particularly a perfluorosulphonic acid PTFE copolymer, and Fumatech FT-fKE-S, which has amine based exchange groups.

Examples of organic/inorganic composite membranes include Nafion/phosphate, Nafion/silica and Naflon/$ZrO_2$.

A preferred membrane is Nafion, which would typically be used in a thickness of up to 300 $\mu$m.

The use of a methanol-tolerant catalyst at the cathode offers the opportunity, in direct methanol fuel cells, of removing the need for an ionically-conducting membrane altogether and employing a single feed of oxygenated methanol solution.

*Operating conditions*

The device of the present invention does not require light to function, and therefore, it may be preferred that it is operated in the dark. The device may be operated at any appropriate temperature, e.g. 0 to 300°C and pressure.

*Fuel supply/waste removal*

Method of supplying fuel and removing waste are discussed in Kelley, S.C., et al., Electrochemical and Solid-State Letters, 3(9), 407-409 (2000); Lee, S.J., et al., Journal of Power Sources, 112, 410-418 (2002); and Hayase, M., et al., Electrochemical and Solid State Letters, 7(8), A231-234 (2004).

*Brief Description of Figures*

Fig. 1 illustrates interdigitated electrodes as may be used in embodiments of the present invention.

Figs. 2(a) and (b) show scanning electron micrographs of respectively devices 2 and 3 which are anodes of the present invention before Pt deposition.

Fig. 3 shows cyclic voltammogramms taken using device 3, immersed in nitrogen-sparged, aqueous 0.5M $H_2SO_4$ at a scan rate of 50 mV per second as a function of the negative bias potential on the Pt with respect to the Si. In figure 3, 1 represents 0 V (no bias voltage) and 2 represents 2.0 V bias. The arrows represent a successive change in voltage of 0.5 V increments.

Fig. 4 shows linear sweep voltammograms of (i) device 1, (ii) device 2, (iii) device 3 with a 2.0 V bias, (iv) device 3 and (vi) device 3 with a 2.0 V bias in $N_2$-dearated electrolyte containing 0.5 M $H_2SO_4$ + 0.5 M $CH_3OH$; scan rate 1 mV s$^{-1}$, room temperature (20°C). The counter electrode was a 2.5 cm x 2.5 cm Pt mesh.

Fig. 5 shows polarisation curves obtained from a simple configuration fuel cell of the present invention employing devices 1, 2 & 3 as the anodes and an oxygen cathode. The symbols in the figure represent the following:

■ Device 1

• Device 2, 0 V

▲ Device 3, 0 V

▼ Device 3, 2.0 V

**Examples**

Three devices were made as anodes, two of which embody the present invention.

Device 1 is a 9.8 cm$^2$ Pt foil coated with Pt, made as a comparative example.

Device 2 is % of 10.0 cm diameter, 500 $\mu$m thick Si wafer, n-type (100) substrate with a resistivity of 1 -10 $\Omega$ cm, coated with 1200 A $TiO_2$ layer and a Au grid, 1200 A thick, 0.375 mm wide and 1 mm apart, which is then coated with Pt. Before coating with Pt, the total area of gold was 6.65 cm$^2$ and the total length of the $TiO_2$/Au perimeter was 218 cm.

Device 3 is similar to device 2, except that a 1200 A thick Au layer was perforated with 360 $\mu$m dia holes 280 $\mu$m apart. Before coating with Pt, the total area of gold was 5.76 cm$^2$ and the total length of the $TiO_2$/Au perimeter was 432 cm.

Devices 2 and 3, before coating with Pt, are shown in Figs. 2a and 2b respectively as SEM pictures, where the difference in the type of gold overlayer can clearly be seen. The bars on the micrographs correspond to 1 mm.

Devices 2 and 3 were made from ca. 20 cm$^2$ 500 $\mu$m n-Si (100) (1-10 ohm-cm) wafers which were carefully cleaned in trichloroethylene (5 minutes at 80°C), acetone (5 minutes at 80°C) and isopropyl alcohol (5 minutes at 80°C) before rinsing in de-ionised water. The silicon was then further cleaned using a standard RCA procedure ($NH_4OH$: $H_2O_2$: $H_2O$ at 80°C for 5 minutes followed by $HCl$:$H_2O_2$:$H_2O$ at 80°C for 5 minutes). The sample was then deoxidised in 6% HF for 5 minutes immediately prior to being placed in a vacuum chamber. Titanium was then deposited to a thickness of 1200 Å and the sample then placed in a lamp heated furnace for rapid oxidation at approximately 900°C for 90 seconds.

The sample was then returned to the vacuum chamber for deposition of the gold (1000A of gold preceded by a thin Ti adhesion layer, 20A).

To make devices 2 and 3, the gold grids were then patterned by spinning standard photoresist onto the surface and patterning with UV light exposed through a mask. Following hardbaking of the resist, the gold was etched in aqua regia, to yield the desired grids.

The Pt foil arid gold grids on devices 1, 2 and 3 were coated with Pt by electrodeposition from an aqueous solution of 2 mM $H_2PtCl_6$, and 10 mM $H_2SO_4$ in a conventional three-electrode cell at room temperature at a constant potential of -100 mV *vs* a silver/silver chloride (Ag/AgCl)/saturated KCI reference electrode. The counter electrode was a Pt foil.

The surface areas of the Pt deposits were determined by measuring the area under the hydrogen adsorption/desorption peaks of the relevant CVs in 0.5 M $H_2SO_4$ (eliminating the charge for the double layer), and assuming a hydrogen-charge/Pt-surface-area conversion factor of 220 $\mu C$ $cm^{-2}$ (Lin, W.F., et al., J. Electroanal. Chem., 364, 1 (1994)). The surface areas of the platinum in devices 1,2 and 3 were found to be 38 $cm^2$, 141 $cm^2$ and 32 $cm^2$, respectively.

Linear sweep voltammogramms of the three devices were run in $N_2$-dearated electrolyte containing 0.5 M $H_2SO_4$ + 0.5 M $CH_3OH$, with a scan rate 1 mV $s^{-1}$, at room temperature (20°C). The reference electrode was a silver/silver chloride (Ag/AgCl)/saturated KCI reference electrode and the counter electrode was a 2.5 cm x 2.5 cm Pt mesh.

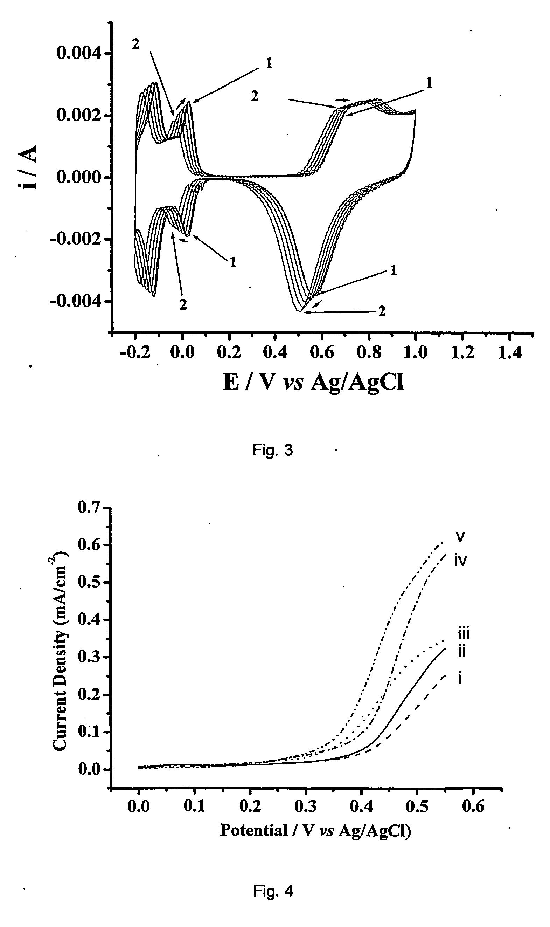

In the absence of methanol, the application of a negative potential on the Pt electrode with respect to the Si, see fig. 3, simply seems to shift the potential of the Pt with respect to the reference electrode, up to ca. 80 mV at 2.5 V bias, estimated from the shift in the hydride adsorption features.

In methanol solution, taking the electrodeposited Pt on Pt foil electrode and device 2 first, with no bias potential applied across the device both it and the Pt foil show an onset potential of 350 mV vs Ag/AgCl, ca. 550 mV vs RHE, which compares well with the literature value of 560 mV mV *vs* RHE[E. A. Batista, G. R. P. Malpass, A. J. Motheo and T. Iwasita, J. Electroanal. Chem., 571 (2004) 273]. However, with a 2.0 V bias, device 2 shows an onset significantly lower, of 210 mV vs Ag/AgCl, a significantly greater shift than can be attributed to the movement of the Pt potential of the device (see fig. 4). Moreover, the device shows a markedly higher current density both in the presence *and absence* of a bias, than the Pt foil.

Device 3 has twice the geometric boundary length between the Pt and $TiO_2$ of device 2 (432 cm *cff*. 218 cm) and this is reflected in the significantly higher current density both with and without an applied bias, and the lower onset potential of 0.3V vs Ag/AgCl (ie. the same as that observed at 2.0V with device 2) even in the absence of the bias. Thus it appears that the application of a bias potential between the Pt and Si of the device results in the predicted enhancement of the electroactivity of the Pt.

Without wishing to be bound by theory, possibly the key observation from this work is the significantly enhanced activity of device 3, characterised by the larger perimeter between the metal layer and the $TiO_2$, even in the absence of an applied bias voltage. Prior to the electrodeposition of Pt, under the conditions of fig. 4, both devices 2 and 3 showed some activity towards methanol oxidation where Au foil showed none.

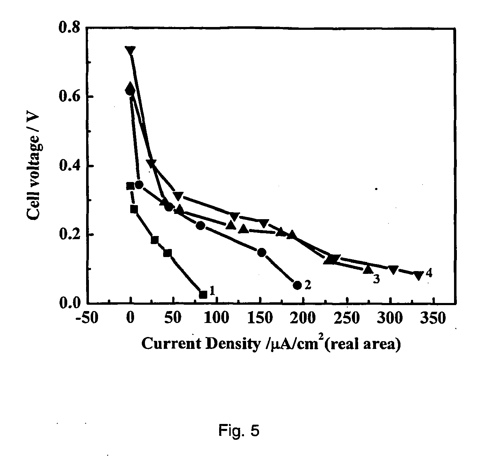

Devices 1, 2 and 3 were employed as the anodes in a simple fuel cell test experiment wherein the anodes and an oxygen cathode (Pt particles/porous carbon on a mesh support, loading was 2.5 mg Pt per $cm^2$) were immersed in a beaker containing 0.5M $H_2SO_4$/0.5M $CH_3OH$ at 20°C, 400 ml $min^{-1}$ oxygen feed to cathode. No membrane was employed to separate the anode from the cathode, hence significant poisoning of the cathode would be expected which, in addition to the low temperature employed, would be expected to result in a poor performance of the fuel cell. Nevertheless, power could be drawn from the fuel cells utilising the three anodes, as can be seen in figure 5.

Device 1 is insufficiently active to support current densities > 90 $\mu A$ $cm^{-2}$; however, device 2 shows a significantly improved performance even in the absence of a negative bias on the Pt overlayer with respect to the Si ("0V"). Device 3 shows an even better performance than device 2 at 0V, strongly supporting the postulate above that the greater activity of device 3 is due to the greater perimeter length. Application of a 2.0V negative bias on the Pt overlayer of device 3 with respect to the Si increases the performance again.

## Claims

1. A fuel cell having:

  (i) a cathode, with an oxidant feed; and
  (ii) an anode, with a fuel feed, wherein the anode comprises

  (a) a semiconductor layer, wherein the layer has a thickness from 1 to 1000 $\mu m$;
  (b) a $TiO_2$ layer on the semiconductor layer, where the layer may include an alkaline earth oxide MO up to an amount where the layer is $MTiO_3$, and where the layer has a thickness from 5 nm to 1 $\mu m$;

(c) an open metal over-layer.

2. A fuel cell according to claim 1, wherein the open metal over-layer comprises platinum.

3. A fuel cell according to claim 2, wherein the platinum is applied over a layer of inert metal.

4. A fuel cell according to claim 3, wherein the inert metal is gold.

5. A fuel cell according to any one of the preceding claims, wherein the open metal over-layer is a grid.

6. A fuel cell according to claim 5, wherein the space left uncovered by the grid is between 30% and 75% of the surface area of $TiO_2$.

7. A fuel cell according to claim 5 or 6, wherein the grid wires have a thickness of between 1 and 1000 $\mu$m and are spaced from one another by 1 to 1000 $\mu$m.

8. A fuel cell according to any one of claims 5 to 7, wherein an adhesion layer is used between the $TiO_2$ layer and the metal grid.

9. A fuel cell according to claim 8, wherein the adhesion layer is a 1 to 10 nm layer of Ti.

10. A fuel cell according to any one of claims 1 to 4, wherein the fuel cell is a micro fuel cell, and whereby the open-metal overlayer is an anode which forms part of a fuel cell layer comprising interdigitated electrodes on the $TiO_2$, wherein the cathode is a platinum or a methanol-tolerant catalyst insulated from the $TiO_2$ layer and the fuel cell additionally comprises means for supplying fuel and removing waste products to the fuel cell layer.

11. A fuel cell according to claim 10, wherein an ion-conducting membrane is located between the fingers of the interdigitated electrodes.

12. A fuel cell according to claim 10 or 11, wherein the anode and cathode have a roughness factor of 10 to 100.

13. A fuel cell according to any one of the preceding claims, wherein the fuel cell comprises means for driving positive holes from the semiconductor layer to the surface of the $TiO_2$ layer.

14. A fuel cell according to any one of the preceding claims, wherein the semiconductor layer is silicon or silicon carbide.

**Patentansprüche**

1. Brennstoffzelle, die Folgendes aufweist:

   (i) eine Kathode mit einer Oxidationsmittelzuführung und
   (ii) eine Anode mit einer Brennstoffzuführung, worin die Anode Folgendes umfasst:

   (a) eine Halbleiterschicht, worin die Schicht eine Dicke von 1 bis 1.000 $\mu$m aufweist;
   (b) eine $TiO_2$-Schicht auf der Halbleiterschicht, worin die Schicht ein Erdalkalioxid MO bis zu einer Menge enthalten kann, in der die Schicht $MTiO_3$ ist, und worin die Schicht eine Dicke von 5 nm bis 1 $\mu$m aufweist;
   (c) eine offene Metalldeckschicht.

2. Brennstoffzelle nach Anspruch 1, worin die offene Metalldeckschicht Platin umfasst.

3. Brennstoffzelle nach Anspruch 2, worin das Platin über einer inerten Metallschicht aufgebracht ist.

4. Brennstoffzelle nach Anspruch 3, worin das inerte Metall Gold ist.

5. Brennstoffzelle nach einem der vorangegangenen Ansprüche, worin die offene Metalldeckschicht ein Gitter ist.

6. Brennstoffzelle nach Anspruch 5, worin der Bereich, der durch das Gitter nicht abgedeckt ist, zwischen 30 und 75

% der TiO$_2$-Oberfläche ausmacht.

7. Brennstoffzelle nach Anspruch 5 oder 6, worin die Gitterdrähte eine Dicke zwischen 1 und 1.000 $\mu$m aufweisen und voneinander 1 bis 1.000 $\mu$m beabstandet sind.

8. Brennstoffzelle nach einem der Ansprüche 5 bis 7, worin eine Haftschicht zwischen der TiO$_2$-Schicht und dem Metallgitter eingesetzt wird.

9. Brennstoffzelle nach Anspruch 8, worin die Haftschicht eine 1 bis 10 nm dicke Ti-Schicht ist.

10. Brennstoffzelle nach einem der Ansprüche 1 bis 4, worin die Brennstoffzelle eine Mikrobrennstoffzelle ist und wobei die offene Metalldeckschicht eine Anode ist, die Teil einer Brennstoffzellenschicht ist, die ineinandergreifende Elektroden auf dem TiO$_2$ umfasst, worin die Kathode Platin oder ein methanoltoleranter Katalysator ist, der gegenüber der TiO$_2$-Schicht isoliert ist, und die Brennstoffzelle zusätzlich dazu Mittel zur Zufuhr von Brennstoff zu und zur Entfernung von Abfallprodukten von der Brennstoffschicht umfasst.

11. Brennstoffzelle nach Anspruch 10, worin eine ionenleitfähige Membran zwischen den Fingern der ineinandergreifenden Elektroden angeordnet ist.

12. Brennstoffzelle nach Anspruch 10 oder 11, worin die Anode und Kathode einen Rauigkeitsfaktor von 10 bis 100 aufweisen.

13. Brennstoffzelle nach einem der vorangegangenen Ansprüche, worin die Brennstoffzelle Mittel umfasst, um positive Löcher von der Halbleiterschicht zur Oberfläche der TiO$_2$-Schicht zu treiben.

14. Brennstoffzelle nach einem der vorangegangenen Ansprüche, worin die Halbleiterschicht Silicium oder Siliciumcarbid ist.

## Revendications

1. Pile à combustible comportant:

    (i) une cathode, avec une amenée d'oxydant; et
    (ii) une anode, avec une amenée de combustible, où l'anode comprend

        (a) une couche à semi-conducteur, où la couche possède une épaisseur de 1 à 1000 $\mu$m;
        (b) une couche TiO$_2$ sur la couche à semi-conducteur, où la couche peut comporter un oxyde MO alcalino-terreux jusqu'à une quantité où la couche est MTiO$_3$, et où la couche a une épaisseur de 5 nm à 1 $\mu$m;
        (c) une sur-couche métallique ouverte.

2. Pile à combustible selon la revendication 1, dans laquelle la sur-couche métallique ouverte comprend du platine.

3. Pile à combustible selon la revendication 2, dans laquelle le platine est appliqué sur une couche de métal inerte.

4. Pile à combustible selon la revendication 3, où le métal inerte est de l'or.

5. Pile à combustible selon l'une quelconque des revendications précédentes, dans laquelle la sur-couche métallique ouverte est une grille.

6. Pile à combustible selon la revendication 5, dans laquelle l'espace non couvert par la grille représente entre 30% et 75% de l'aire de surface de TiO$_2$.

7. Pile à combustible selon la revendication 5 ou 6, dans laquelle les fils de grille ont une épaisseur entre 1 et 1000 $\mu$m et sont espacés les uns des autres de 1 à 1000 $\mu$m.

8. Pile à combustible selon l'une quelconque des revendications 5 à 7, dans laquelle une couche d'adhésion est utilisée entre la couche TiO$_2$ et la grille métallique.

**9.** Pile à combustible selon la revendication 8, dans laquelle la couche d'adhésion est une couche de 1 à 10 nm de Ti.

**10.** Pile à combustible selon l'une quelconque des revendications 1 à 4, dans laquelle la pile à combustible est une micropile à combustible, et dans laquelle la sur-couche métallique ouverte est une anode qui fait partie d'une couche de pile à combustible comprenant des électrodes interdigitées sur le $TiO_2$, où la cathode est un catalyseur au platine ou tolérant au méthanol isolé de la couche $TiO_2$, et la pile à combustible comprend additionnellement des moyens pour l'amenée du combustible et le retrait des déchets à la couche de la pile à combustible.

**11.** Pile à combustible selon la revendication 10, dans laquelle une membrane conductrice d'ions se situe entre les doigts des électrodes interdigitées.

**12.** Pile à combustible selon la revendication 10 ou 11, dans laquelle l'anode et la cathode ont un facteur de rugosité de 10 à 100.

**13.** Pile à combustible selon l'une quelconque des revendications précédentes, dans laquelle la pile à combustible comprend des moyens pour ménager des trous positifs de la couche à semi-conducteur à la surface de la couche $TiO_2$.

**14.** Pile à combustible selon l'une quelconque des revendications précédentes, dans laquelle la couche à semi-conducteur est du silicium ou du silicium carbure.

Fig. 1

Fig. 2a

Fig. 2b

Fig. 3

Fig. 4

Fig. 5

## REFERENCES CITED IN THE DESCRIPTION

### Patent documents cited in the description

- GB 0419629 A

- WO 2006024869 A

### Non-patent literature cited in the description

- **Hashimoto et al.** *Electrochem. Comm.,* 2000, vol. 2, 207
- **Torres, G.R. et al.** *J. Phys. Chem. B,* 2004, vol. 108, 5995-6003
- **Kelley, S.C. et al.** *Electrochemical and Solid-State Letters,* 2000, vol. 3 (9), 407-409
- **Lee, S.J. et al.** *Journal of Power Sources,* 2002, vol. 112, 410-418
- **Hayase, M. et al.** *Electrochemical and Solid State Letters,* 2004, vol. 7 (8), A231-234

- **Jayashree et al.** *Electrochim. Acta,* 2005, vol. 50, 4674-4682
- **Christensen, P.A. et al.** *Electrochimica Acta,* 2000, vol. 45, 4237
- **Lin, W.F. et al.** *J. Electroanal. Chem.,* 1994, vol. 364, 1
- **E. A. Batista ; G. R. P. Malpass ; A. J. Motheo ; T. Iwasita.** *J. Electroanal. Chem.,* 2004, vol. 571, 273